# EUROPEAN PATENT SPECIFICATION

(11) **EP 0 674 338 B1**
(45) Date of publication and mention of the grant of the patent: **29.07.1998**
(21) Application number: 95301780.3
(22) Date of filing: 17.03.1995
(51) Int. Cl.: H01J 43/10, G01T 1/28, G01J 1/42

(54) **Narrow band high sensitivity photo-detector for inverse photoemission spectroscopy**
Schmalbandiger hochempfindlicher Photodetektor zur inversen Photoemissionspektroskopie
Photo-détecteur à bande étroite et à haute sensibilité pour la spectroscopie de photo-emission inverse

(30) Priority: 24.03.1994 JP 53822/94
(43) Date of publication of application: 27.09.1995
(73) Proprietor: HIROSHIMA UNIVERSITY, Hiroshima City Hiroshima Pref. (JP)
(72) Inventor: Namatame, Hirofumi, Higashihiroshima City, Hiroshima Pref (JP); Taniguchi, Masaki, Hiroshima City, Hiroshima Pref (JP)
(74) Representative: Nicholls, Michael John

(56) References cited:
- EP-A- 0 190 079
- EP-A- 0 562 874

## Description

The present invention relates to a narrow band high sensitivity photo-detector, which belongs to technical fields of electron technology and photon technology and is used for a high resolution inverse photoemission spectroscope.

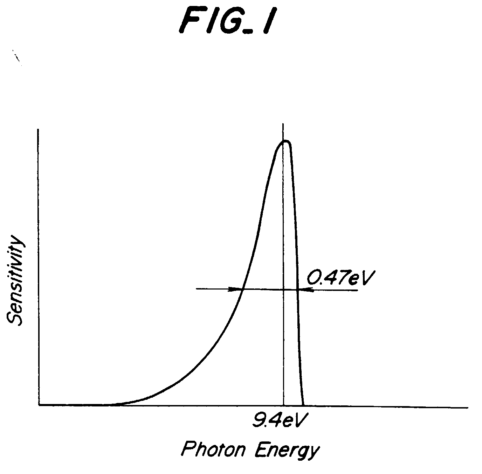

A band bass filter type photo-detector for inverse photoemission spectroscopy is formed of a simple combination of low-cut and high-cut filters. In a recently developed photo-detector (see EP-A-0 562 874) having the most excellent property as the low-cut filter, there is adopted a photo-electron multiplier which is provided with Cu-BeO deposited with KCℓ thin film on a surface thereof for the first dynode, while as the high-cut filter there is adopted SrF₂ monocrystal window, so that a sensitivity property of central energy 9.40 eV and half value width 0.47 eV as shown in Fig. 1 is employed.

This band pass filter type photo-detector is featured in that the structure is simple and the operational stability is high. However, the obtainable resolution thereof is no more than 0.47 eV at most.

The photoemission spectroscopy and the inverse photoemission spectroscopy are means for directly observing occupied and unoccupied electronic states of energy in material, respectively, and hence have a complementary relation with each other. The presently standardized resolution of the photoemission spectroscopy is in order of 0.3 eV. The investigation of occupied and unoccupied electronic states of energy with the precision of the same order under the employment of the photoemission and the inverse photoemission spectroscopies respectively is extremely desirable for the research of material. It is necessary for the realization thereof to narrow the bandwidth of the band pass filter type photo-detector into the order of 0.3 eV.

In general, when the higher resolution is sought, the detection sensitivity is lowered in company therewith. It is the same as with the band pass filter type photo-detector. In case that the surface of the material to be measured is unstable in vacuum, an experiment where signals should be accumulated for a long time is unpracticable. In this case, it is required to raise the detection sensitivity at the sacrifice of the resolution. However, it is impossible to vary the passband of the conventional bandpass filter type photodetector during the experiment. Accordingly, it is required for practising the high resolution to provide a measuring apparatus comprising two kinds of detectors, that is, a high resolution detector, even if the detection sensitivity is somewhat low, and a high sensitivity detector.

Photoemission spectroscopy and inverse photo-emission spectroscopy provide information relating to occupied and unoccupied electronic states respectively, so that the whole aspect of electronic states of the material cannot be clarified until both of these are combined. The resolution of the conventional photoemission spectroscopy is of the order of about 0.3 eV, while the resolution of the conventional inverse photoemission spectroscopy is of the order of about 0.5 eV. Accordingly, for comparing and investigating respective data of both of these spectroscopies it is necessary to afford comparable resolutions thereto. The inverse photoemission spectroscopy is a method for clarifying the unoccupied electronic state of the material by applying a monochromatised electron to a sample, taking notice of a certain single energy component of light emitted from the surface of the sample, and by observing the intensity of the emitted light as a function of the energy of the noticed electron beam. The energy width of the electron beam is defined by the expanse of thermo-electron in the electron source, which is about 0.25 eV. On the other hand, the width of pass band of the bandpass filter type photodetector is about 0.47 eV at the least conventionally and has been improved into 0.35 eV by recent technical development. However, for obtaining the resolution comparable with that of the photoemission spectroscopy it is necessary to narrow the passband of the photodetector into the order of the electron beam width of 0.25 eV.

In general, when the resolution is raised, the detection sensitivity is lowered. It is the same as with the bandpass filter type photodetector for inverse photoemission spectroscopy, so that, when the width of the detector is narrowed to half value, the detection sensitivity is lowered and hence longer time is required for the measurement. On the other hand, when the width of the detector is widened half value, the sensitivity is raised, thereby the measurement is carried out in short time. In general, whether either the resolution or the sensitivity is preferential is decided by the limitation of the time required for the measurement and whether the material to be measured is stable or not, in super high vacuum wherein the inverse photoemission spectroscopy is effected.

The resolution of the inverse photoemission spectroscope is dominantly defined by the bandwidth of the band pass filter type of photo-detector.

The conventional photo-detector practically used of this kind consists of two types, that is, photo-electron multiplier type and Geiger Muller tube type. With respect to the stability and the affinity to super-high vacuum, the photo-detector of photo-electron multiplier type is irresistively advantageous, and hence is adopted by the most of research groups in the world. The photo-detector according to the present invention belongs to this type also. However, the photo-detector is inferior with respect to the resolution in spite of its superiority in the stability and the super-high vacuum performance. The bandwidth of the recently used photo-detector of this type is about 0.47 eV and the least.

The object of the present invention is to provide a narrow band and high sensitivity photo-detector for inverse photoemission spectroscopy in which, the bandwidth is improved into the order of about 0.35 eV by a very simple method, so as to attain the aimed improvement of about one and half times, although the sensitivity would be essentially lowered in prior art by narrowing the band width.

The present invention provides a narrow band high sensitivity photo-electron detector for use in an inverse photoemission spectroscope in which an electron gun directs an electron beam onto a sample, the photo-detector being adapted to receive light reflected from said sample to effect photo-detection, said photo-detector comprising:
a photo-electron multiplier including a dynode having deposited thereon a thin film of KCl;
a collector for collecting electrons emitted by said dynode; and
output means coupled to said collector for measuring the electrons received thereby; characterised by:
a CaF₂ monocrystal window in front of said dynode and having deposited thereon a KCl thin film.

Thus, the central energy of the band pass filter is shifted toward higher side by about 0.5 eV from the conventional value, and hence it results that electrons having energy higher than the conventional value are available for employing those of better quality. So that, the present invention contributes to the improved performance of the whole arrangement including the electron gun.

The photo-detector of the present invention has high sensitivity, as well an improved half value width from the conventional value of 0.47 eV to about 0.3 eV as to that for inverse photoemission spectroscopy. The improvement of the resolution and the sensitivity of the band pass filter type photo-detector facilitates the high resolution inverse photoemission spectroscopy and contributes to the estimation of all kinds of material to an extreme extent.

The invention will be further described by way of example in the following description given with reference to the accompanying drawings, in which:-
Fig. 1 is a diagram showing a property of a conventional band pass filter type photo-detector for inverse photoemission spectroscopy in the prior art;
Fig. 2 is an outlined diagram showing the principle of a narrow band high sensitivity photo-detector for an inverse photoemission spectroscope according to the present invention;
Fig. 3 is a diagram showing a principal arrangement of an example of the photo-detector comprising a photo-electron multiplier according to the present invention;
Figs. 4(A), 4(B) and 4(C) are diagrams showing energy dependency of detection sensitivities and transmissibility of the window comprised in the photo-detector according to the present invention, respectively;
Fig. 5 is a diagram showing an actual arrangement of the photo-detector according to the present invention;
Fig. 6 is a diagram showing photoemission absorption property of the photo-detector comprising KCℓ thin films deposited in thickness of 500 Å, 1000 Å and 1500 Å respectively (1 Å = 0.1 nm); and
Fig. 7 is a diagram of a band pass filter property showing an unsymmetrical peak structure according to the present invention, wherein a CaF₂ monocrystal window is combined with KCℓ thin film deposited in front surface of a photo-electron multiplier.

Throughout different views of the drawings; 1 is an electron gun, 2 is an electron beam, 3 is a sample, 4 is a reflected light, 5 is a converging mirror, 6 is a photo-detector, 7 is a photo-electron multiplier, 8 is a CaF₂ monocrystal window deposited with KCℓ thin film, 9 and 10 are KCℓ thin films, 11 is a first dynode, 12 is an amplifier, 13 is a pulse counter circuit, 14 is a photo-electron, 15 is an electrode and 16 is a collector.

### Description of the Preferred Embodiment

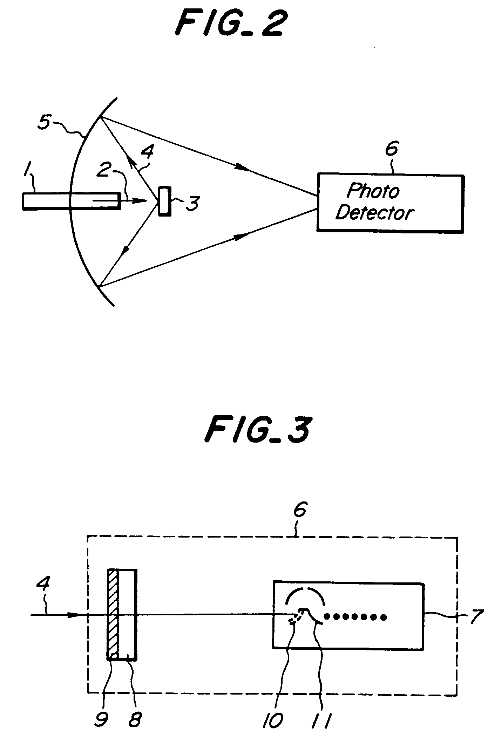

Fig. 2 shows an outlined principle of an inverse photoemission spectroscopy, in which 1 is an electron gun, 2 is an electron beam emitted therefrom, and 3 is a sample. The electron beam 2 emitted from the electron gun is applied on the sample. Light 4 emitted from the sample 3 is converged by a converging mirror 5 and projected to a photo-detector 6.

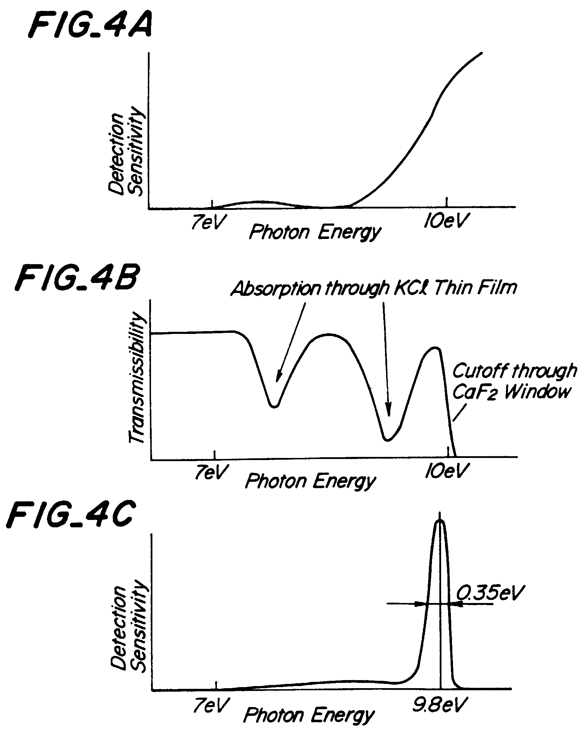

Fig. 3 shows the arrangement of the inverse photoemission multiplier 7 provided in a photo-detector as shown in Fig. 2, wherein a CaF₂ monocrystal window 8 is deposited with a KCℓ thin film 9 of 150 Å in thickness on the surface thereof.

The light 4 as shown in Fig. 3 is the same as the incident light of the photo-detector as shown in Fig. 2. So that, the light passing through the KCℓ thin film 9 and the CaF₂ monocrystal window 8 is applied on the first dynode 11 of a photo-electron multiplier 7 of solar blind type (e.g. HTV: R-595), wherein a KCℓ thin film 10 is deposited in thickness of 1000 Å on surface of said fist dynode.

The incident light 4 of the photo-detector 6 as shown in Fig. 2 passes through the CaF₂ monocrystal window 8 deposited with the KCℓ thin film 9 as shown in Fig. 3. The cutoff energy of the CaF₂ monocrystal window 8 is 10 eV at room temperature, so that it results that any light having energy higher than about 10 eV cannot pass therethrough the first dynode as shown in Fig. 4(B). Figs. 4(A), 4(B) and 4(C) show the detection sensitivity, the transmissibility and the detection sensitivity at central energy 9.8 eV of the CaF₂ monocrystal window, respectively.

Consequently, principal constituents according to the present invention are the following.
(a) The solar blind type photo-electron multiplier 7.
(b) The first dynode 11 deposited with the KCℓ thin film 9 of 1000 Å thickness on the surface thereof.
(c) The CaF₂ monocrystal window 8 deposited with the KCℓ thin film 9 of 150 Å in thickness on the surface thereof.

The combination of the constituent (a), that is, the photo-electron multiplier 7, the constituent (b), that is, the first dynode 11 and the constituent (c), that is, the KCℓ thin film 9 deposited on the surface of the monocrystal window 8 acts as a low cut filter, while the CaF₂ monocrystal window 8 included the KCℓ thin film 9 in the constituent (C) partially acts as a high cut filter, as is apparent from Figs. 4(A), 4(B) and 4(C). It is possible according to the combination of the constituents (a), (b) and (c) to realize the band pass filter type photo-detector having the property of the central energy 9.8 eV and 0.35 eV in the half width value as shown in Fig. 4(C), as well as the sensitivity increased by about 1.6 times in comparison with that employing the conventional SrF₂ window.

The present invention is conceived on the basis of the following facts.
(1) The band pass property of the conventional photo-detector is attained by the combination of the low pass filter comprising a SrF₂ monocrystal window and the high pass filter based on the rise-up property of the photoelectron multiplier.
(2) The deterioration of the resolution is caused by the gradual cutoff property of the highpass filter.
(3) The property of the highpass filter is defined by the sensitivity performance of the photo-electron multiplier, so that the band width can be reduced by the improvement thereof.
(4) Thus, it is attained in the present invention by employing the photo-electron multiplier having the first dynode deposited with KCℓ thin film that the rise-up of the sensitivity performance is sharpened, the efficiency of photoemission is improved, and the sensitivity is increased.
(5) Moreover, it is required for narrowing the band width to improve the cutoff property of the highpass filter, that is, the sensitivity property of the photoelectron multiplier.
(6) Although thus it is required to introduce the thin film having a sharp absorption property in the vicinity of cutoff, the sensitivity is lowered as a whole, because of finite absorption caused by the thin film proper.
(7) It is required in the introduction of the absorbing thin film to realize the high sensitivity. It is enough for this requirement that the photo-electron multiplier is operated in the high sensitivity region, that is, in a higher energy region than that of prior art.
(8) According to the present invention, the cutoff energy of the lowpass filter is shifted toward higher side by 0.5 eV by replacing the conventional SrF₂ window to the CaF₂ window.
(9) A thin film having the sharp absorption corresponding to the cutoff of CaF₂ is introduced. The KCℓ thin film is the most suitable for this introduction.
(10) According to the combination of the KCℓ thin film, the CaF₂ window and the photo-electron multiplier deposited with KCℓ of 1000 Å is thickness in front of dynode, the bandwidth is narrowed from 0.47 eV to 0.35 eV and the sensitivity is increased by about 1.6 times in comparison with those of prior art.

It is usual in the inverse photoemission spectroscope that, in the super high vacuum of 10⁻⁸ Pa (10⁻¹⁰ Torr) order, as shown in Fig. 2, the low speed electron beam 2 is projected and radiated on the sample 3, the light 4 emitted therefrom is directed to the photo-detector 6 through a large solid angle collecting mirror 5. The photo-detector according to the present is arranged in such a manner that the collected light 4 within the range of 9.8±0.12 eV only can be detected.

In the photo-detector according to the present invention, the sensitivity is improved as well as the low cutoff filter property is improved by depositing the KCℓ thin film 10 on the dynode 11 consisting of Cu-BeO. So that, the conventional resolution 0.47 eV can be maintained by the combination with the high-cut filter formed of the conventional SrF₂ window.

As to the photo-detector, CaF₂ having high cutoff energy 10 eV is preferable than conventional SrF₂ having cutoff energy 9.5 eV. However, the bandwidth is widened and the resolution is lowered by shifting the cutoff energy of the high-cut filter toward high energy side.

Then, according to the present invention, the KCℓ thin film 9 is deposited on the CaF₂ monocrystal window 8, so as to shift the cutoff energy of the low-cut filter toward high energy side under the utilization of the light-absorption property, as well as to improve the cutoff property.

According to the present invention, by combining the high cutoff filter comprising the CaF₂ monocrystal window 8 and the low cutoff filter employing the KCℓ light absorbing thin film 10, the bandwidth can be improved to 0.35 eV and further the detection sensitivity is successfully raised by about 1.6 times comparing with the prior art.

The low-cut property is conventionally defined only by the sensitivity property of the first dynode, which is usually coated with material for improving the sensitivity, while, according to the present invention, it is improved by introducing a new cutoff element as the novel feature and as the essential constituent. Thus, according to the present invention, the CaF₂ monocrystal window 8 is introduced and further the KCℓ thin film 9 is employed, through which the most suitable low-cut property for the high-cut property of the introduced CaF₂ window 8 can be realized. The KCℓ thin film 9 is provided by directly depositing it on the surface of the CaF₂ monocrystal window 8 as used for the high-cut filter. An RbF thin film which has the similar light-absorption property is available also for the photo-detector of the present invention other than the KCℓ thin film.

According to the narrow band high sensitivity photo-detector of the present invention, an industrially remarkable effect such that the following properties can be detected with narrow band and high sensitivity.
(1) The photo-detecting property of photo-electron multiplier is improved by depositing with KCℓ thin film onto the first dynode of said photo-electron multiplier.
(2) The light transmission property of the CaF₂ monocrystal window is improved by depositing with the KCℓ thin film.
(3) The sensitivity property of the photo-detector is improved by the combination of (1) and (2).

### [Example]

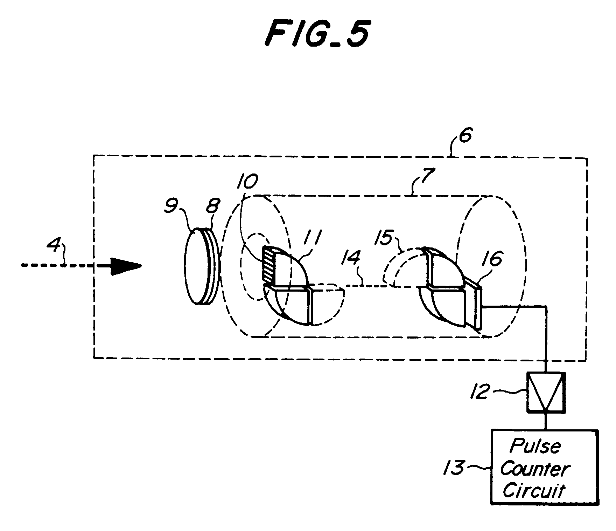

A concrete example of the narrow band high sensitivity photo-detector for inverse photoemission spectroscopy according to the present invention will be described hereinafter in detail with the attached drawings. In Fig. 5 shows an example of the actual arrangement of the photo-detector 6 as shown in Fig. 2.

In Fig. 2, 4 is the incident light, 8 is the CaF₂ monocrystal window deposited with a KCℓ thin film of 1000 Å in thickness, 7 is a photo-electron multiplier, 11 is a first dynode deposited with a KCℓ thin film of 1000 Å thickness, 12 is an amplifier connected with an output of the multiplier 7, 13 is a pulse counter circuit, 14 is a photo-electron 15 is an electrode and 16 is a collector.

The light transmission property of the CaF₂ monocrystal window 8 show the light transmission property of lowpass filter, such that the absorption coefficient of exciton is abruptly increased in the vicinity of 10 eV as shown in Fig. 4(B) wherein the light cannot be transmitted in the region over this cutoff energy, that is, about 10 eV. On the other hand, the CaF₂ monocrystal window 8 is transparent for the light in the region below this cutoff energy, thereby the transmission property thereof is substantially flat.

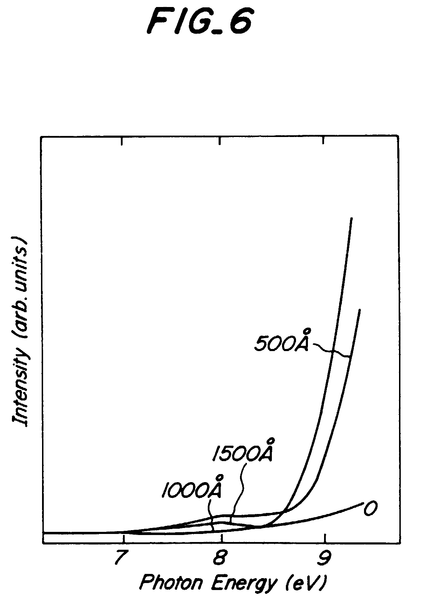

Next, the photo-detection property of the photoelectron multiplier 7 having the first dynode 11 deposited with KCℓ thin film 10 in 1000 Å thick will be described. The first dynode 11 is formed of CuBe-O and the photoemission absorption thereof shows a definite value in the vicinity of 6 eV and further is increased together with the increase of the photo-electron energy. Thus, when the KCℓ thin film 10 is deposited on the surface of the first dynode 11, the photoemission absorption property is varied such as it is abruptly increased in the vicinity of photo-energy 9 eV. This is because of the reflection of the photoemission absorption property of the KCℓ thin film 10, as shown in Fig. 6. The KCℓ thin film 10 is an ion crystal, that is, an insulator proper. Accordingly, it is charged by deriving the photoemission therefrom, so that the deposition of too thick KCℓ film reduces the absorption, while the deposition of too thin KCℓ film reduces the contribution to the absorption thereof and hence the absorption decreases. Consequently, it is necessary to appropriately select the most suitable thickness of the KCℓ thin film to be deposited.

When the photo-electron absorption is measured as the thickness of KCℓ thin film, it appears that this absorption is almost simply increased until the vicinity of 1000 Å thickness as shown in Fig. 6, and present the tendency of saturation with further increase of thickness. According to further detailed observation of film thickness dependency of the photo-electron absorption, it appears that the absorption at the vicinity of 8 eV is reduced at the vicinity of 1000 Å thickness. So that, it is possible to realize such a property that the photo-electron absorption is reduced at the vicinity of 8 eV and is suddenly increased over 9 eV by depositing KCℓ thin film of 1000 Å thickness. Even if the thickness of the KCℓ thin film 10 is less than 500 Å, the absorption is suddenly increased below 9 eV, so that the too thin KCℓ film 10 results unfavorably.

The photo-electron 14 from the first dynode 11 is amplified by the order of 106 through plural stages of electrodes 15 for secondary electron multiplication, collected by the collector 16 and the intensity thereof is observed by the pulse counter circuit 13 after the preamplification through the amplifier 12. The photoelectron multiplier 7 has the property of highpass filter as to the photo-energy, so that the cutoff energy thereof is defined by the rise-up of photoemission absorption of the KCℓ thin film, and hence is positioned at the vicinity of 9 eV as shown in Fig. 6.

Thus, a band pass filter can be realized by combining the CaF₂ monocrystal window 8 deposited with the KCℓ thin film 9 and the first dynode 11 of the photo-electron multiplier 7 deposited with the KCℓ thin film 10, that is, the lowpass filter and the highpass filter respectively, the difference between respective cutoff energies become the bandwidth thereof. However, the practical property does not present an ideal step function like filter property, but represents a gradual variation at the vicinity of cutoff, so that the practically obtained band pass property show an unsymmetrical peak structure based on the reflections of both of respective rise-up properties.

The cutoff property of the lowpass filter is sharp in the good CaF₂ monocrystal window because of the employment of the exciton absorption, while the cutoff property of the highpass filter is comparatively gradual because of the photoemission absorption property reflecting the inter-band transition of KCℓ thin film. So that it is required for narrowing the half value width of passband to improve the highpass filter property.

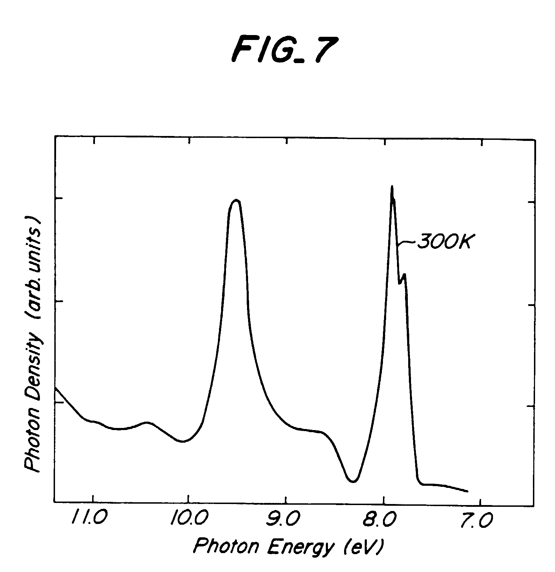

The transmission property of KCℓ thin film represents sharp absorption at the vicinity of 9.5 eV, the energy level of which is somewhat lower than the cutoff of lowpass filter and corresponds to the cutoff of highpass filter as shown in Fig. 7. A highpass filter having a cutoff property improved by the aforesaid combination of KCℓ thin film 10 with KCℓ thin film of first dynode 11 of the photo-electron multiplier 7 can be realized.

In the narrow band high sensitivity photo-detector for inverse photoemission spectroscopy according to the present invention, the CaF₂ monocrystal window is employed as the high-cut filter, while the photo-electron multiplier having high sensitivity in the region exceeding ultraviolet energy in vacuum as the low-cut filter. In addition to thus fundamental arrangement according to the present invention, for improving the performance, the low energy side property of the band pass filter is improved through the absorption property of the KCℓ thin film 9 which is deposited on the CaF₂ monocrystal window 8 in the phototransmission region, as well as the KCℓ thin film 10 is deposited on the photoemission surface of the first dynode 11 of the photo-electron multiplier 7 for the improvement of sensitivity. The present invention is featured in that the bandwidth is narrowed and the sensitivity is improved by taking notice of the temperature dependency of light absorption property of CaF₂ monocrystal window 8, KCℓ thin film 9 deposited thereon and KCℓ thin film 10 deposited on the first dynode 11.

A band high sensitivity photo-detector for inverse photoemission spectroscopy according to the present invention is operated in a higher sensitivity region than that of the conventional photo-electron multiplier, which is provided by replacing the SrF2 monocrystal window in the prior art, which is used as the high-cut filter in the conventional photo-detector, by providing the CaF₂ monocrystal window with KCℓ thin film 9, while the property of low-cut filter is improved by introducing the KCℓ thin film 10 having the sharp absorption property in the vicinity of cutoff energy of the CaF₂ monocrystal window. According to this combination in the present invention, the bandwidth is narrowed, while the sensitivity is increased in comparison with those of the photodetector comprising the conventional SrF₂ monocrystal window. The present invention is featured in that the sensitivity and the bandwidth property are simultaneously improved by simply changing the conventional monocrystal window comprised in the conventional band pass filter type photodetector to the CaF₂ monocrystal window deposited with KCl thin film of 150 Å thick.

## Claims

1. A narrow band high sensitivity photo-electron detector for use in an inverse photoemission spectroscope in which an electron gun (1) directs an electron beam (2) onto a sample (3), said photo-detector (6) being adapted to receive light (4) reflected from said sample to effect photo-detection, said photo-detector (6) comprising:
a photo-electron multiplier (7) including a dynode (11) having deposited thereon a thin film (10) of KCl;
a collector (16) for collecting electrons emitted by said dynode; and
output means coupled to said collector for measuring the electrons received thereby; characterised by:
a CaF₂ monocrystal window (8) in front of said dynode (11) and having deposited thereon a KCl thin film (9).

2. A detector according to claim 1, wherein said output means comprises an amplifier (12) connected with said photo-electron multiplier (7) and a pulse counter circuit (13) connected with said amplifier (12).

## Patentansprüche

1. Schmalbandiger, hochempfindlicher Photodetektor zur Verwendung in einem inversen Photoemissionsspektroskop, bei dem eine Elektronenkanone (1) einen Elektronenstrahl (2) auf eine Probe (3) richtet, wobei der Photodetektor (6) dazu ausgebildet ist, von der Probe reflektiertes Licht (4) zwecks Photodetektion zu empfangen, wobei der Photodetektor (6) umfaßt:
einen Photoelektronenvervielfacher (7) mit einer Dynode (11), auf der eine Dünnschicht (10) aus KCI niedergeschlagen ist;
einen Kollektor (16) zum Sammeln von durch die Dynode emittierten Elektronen; und
eine Ausgabeeinrichtung, die mit dem Kollektor gekoppelt ist, um die von ihm empfangenen Elektronen zu messen, **gekennzeichnet durch**:
ein CaF₂-Einkristall-Fenster (8), das sich vor der Dynode (11) befindet, und auf dem eine KCl-Dünnschicht niedergeschlagen ist.

2. Detektor nach Anspruch 1, bei dem die Ausgabeeinrichtung einen an den Photoelektronenvervielfacher (7) angeschlossenen Verstärker (12) und eine an den Verstärker (12) angeschlossene Pulszählschaltung (13) enthält.

## Revendications

1. Détecteur de photoélectrons à haute sensibilité et à bande étroite, destiné à être utilisé dans un spectroscope à photoémission inverse, dans lequel un canon à électrons (1) dirige un faisceau d'électrons (2) sur un échantillon (3), ledit photodétecteur (6) étant adapté pour recevoir une lumière (4) réfléchie par ledit échantillon pour effectuer une photodétection, ledit photodétecteur (6) comportant :
un multiplicateur de photoélectrons (7) comportant une dynode (11), sur laquelle est déposée un film mince de KCl (10),
un collecteur (16) pour recueillir des électrons émis par ladite dynode, et
des moyens de sortie reliés audit collecteur pour mesurer les électrons reçus par celui-ci, caractérisé par :
une fenêtre (8) constituée d'un monocristal de CaF₂ située en avant de ladite dynode (11) et sur laquelle es déposé un film mince de KCl (9).

2. Détecteur selon la revendication 1, dans lequel lesdits moyens de sortie comportent un amplificateur (12) connecté audit multiplicateur de photoélectrons (7) et un circuit de compteur d'impulsions (13) connecté audit amplificateur (12).
